# EUROPÄISCHE PATENTSCHRIFT

(11) **EP 0 685 315 B1**
(45) Veröffentlichungstag und Bekanntmachung des Hinweises auf die Patenterteilung: **18.07.2001**
(21) Anmeldenummer: 95108491.2
(22) Anmeldetag: 02.06.1995
(51) Int. Cl.: B29C 49/04, B29C 49/78, B29C 47/92

(54) **Verfahren zum Extrusionsblasformen von Hohlkörpern aus thermoplastischem Kunststoff**
Method for extrusion blow moulding of hollow articles of thermoplastic material
Procédé pour la production de corps creux en matière thermoplastique par extrusion soufflage

(30) Priorität: 03.06.1994 DE 4419460; 20.06.1994 DE 4421171
(43) Veröffentlichungstag der Anmeldung: 06.12.1995
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald, Dr.-Ing.

(56) Entgegenhaltungen:
- EP-A- 0 026 828
- EP-A- 0 162 045
- EP-A- 0 345 474
- EP-A- 0 536 438
- DE-A- 3 935 338
- DE-A- 3 936 301

## Beschreibung

Die Erfindung betrifft ein Verfahren zum Extrusionsblasformen von Hohlkörpern aus thermoplastischem Kunststoff, bei dem schlauchförmige Vorformlinge mittels eines Schneckenextruders aus dem nach Maßgabe eines Wanddickenprogramms gesteuerten Düsenspalt eines Strangpreßkopfes extrudiert und in folgenden Arbeitstakten die extrudierten Vorformlinge in einer Blasform zu Hohlkörpern aufgeweitet, die Hohlkörper ausgeformt und anhaftende Abfallbutzen entfernt werden, wobei ferner zu jedem Vorformling die bis zum Erreichen einer vorgegebenen Schlauchlänge benötigte Extrusionszeit gemessen und deren Sollwertabweichung von einem Sollwert bestimmt wird.

Das den Düsenspalt steuernde Wanddickenprogramm weist mindestens ein ausgeprägtes Funktionsmaximum auf, dem ein Vorformlingsabschnitt großer Wandstärke zugeordnet ist. Der dem Funktionsmaxium zugeordnete Vorformlingsabschnitt unterliegt in der Blasform einer starken Reckung. Je extremer die Programmkurve in einzelnen Bereichen eingestellt ist, umso genauer muß das zu diesen Punkten gehörende Material, welches der größten Reckung unterworfen ist, auch an der richtigen Stelle in der Blasform positioniert werden. Abweichungen von mehr als ± 1 % bezogen auf die Höhe der Blasform, führen zu erheblichen Qualitätseinbußen in Form eines Hohlkörperverzugs, geringeren Stauchwerten und geringeren Festigkeitseigenschaften des fertigen Hohlkörpers.

Da die Extrusionsparameter, beispielsweise die Förderleistung, die rheologischen Eigenschaften der Kunststoffschmelze, die Materialtemperatur und dergleichen, Schwankungen unterliegen, ist eine Regelung der Schneckendrehzahl und/oder des Düsenspaltes erforderlich. Zahlreiche unterschiedliche Regelungsverfahren sind bekannt und können bei dem eingangs beschriebenen Extrusionsblasverfahren eingesetzt werden.

Bei dem aus EP 0 026 828 A1 bekannten Verfahren ist eine optische Meßvorrichtung zur Erfassung der Unterkante des extrudierten Vorformlings vorgesehen, die in einem vorgegebenen Abstand von dem Düsenspalt positioniert ist und bei Erfassung der Vorformlings-Unterkante die Bewegung der Blasform steuert. Der Zeitpunkt, zu dem der Vorformling seine Soll-Lage erreicht, wird ebenfalls gemessen und mit einem Sollzeitpunkt verglichen. Nach Maßgabe der Sollwert-Abweichung wird die Drehzahl des Schneckenextruders geregelt, mit dem Ziel, die Zeit, in welcher ein Vorformling gebildet wird, möglichst konstant zu halten.

Daneben ist es bekannt, die Blasform unabhängig von der Vorformlingslänge zeitlich zu steuern. Der Bewegungsablauf der Blasform und deren Teile wird zeitstarr gesteuert.

Aus EP 0 345 474 A1 ist ein Regelungsverfahren bekannt, bei dem Hohlkörper- und Abfallbutzengewichte gemessen und die Schneckendrehzahl sowie der Düsenspalt nach Maßgabe der Gewichtsmeßwerte geregelt werden.

Die Praxis hat gezeigt, daß auch die Blasprodukte einer gut ausgeregelten Blasformanlage beachtliche Stauchwertunterschiede aufweisen. Wenn das Wanddickenprogramm auf schmale Bereiche beschränkte, ausgeprägte Funktionsmaxima aufweist, sind diese Unterschiede noch viel größer. Zur Erreichung hoher Stauchwerte bei minimalem Einsatzgewicht sind solche ausgeprägten Funktionsmaxima aber erforderlich. Je extremer die Funktionsmaxima ausgeprägt sind, um so wichtiger ist die Einhaltung der Lage zur Blasform. Werden bei Stichproben an einzelnen Hohlkörpern Unterschreitungen der Mindeststauchwerte festgestellt, so ist die ganze Produktionscharge unbrauchbar, denn ein unzureichender Stauchwert eines einzigen Hohlkörpers kann in der Praxis die Ursache dafür sein, daß beispielsweise ein Stapel aus gefüllten Kanistern kippt. Um bei dem Betreiben des Verfahrens auf der sicheren Seite zu liegen, hilft man sich in der Praxis häufig damit, daß die Kurve des Wanddickenprogramms unter Reduzierung der Funktionsmaxima, bei gleichzeitiger Verbreiterung der Funktionsspitzen, verschliffen wird, wobei erhöhter Materialbedarf oder geringere Stauchwerte in Kauf genommen werden. Das ist unbefriedigend.

Der Erfindung liegt die Aufgabe zugrunde, das eingangs beschriebene Verfahren so weiter zu verbessern, daß beim Betrieb des Verfahrens mit einer Programmkurve, die mindestens ein steil ausgeprägtes Funktionsmaximum aufweist, sichergestellt ist, daß die Hohlkörper die an sie gestellten Anforderungen bei minimalem Einsatzgewicht, insbesondere hinsichtlich der Mindeststauchwerte, erfüllen.

Zur Lösung dieser Aufgabe lehrt die Erfindung, daß ein dem Vorformling zugeordnetes Signal gespeichert wird, wenn die Sollwertabweichung der Extrusionszeit außerhalb eines vorgegebenen betrieblichen Toleranzfeldes liegt, und daß mit dem Signal eine Sortiervorrichtung zum Ausschleusen fehlerbehafteter Hohlkörper gesteuert wird. Fehlerbehaftete Hohlkörper meint solche Hohlkörper, die aus einem mit dem Signal belegten Vorformling gefertigt werden. - Es versteht sich, daß auch bei dem erfindungsgemäßen Verfahren eine Regelung der Schneckendrehzahl und/oder des Düsenspaltes erfolgt, wobei das Regelungsverfahren zur Steuerung der Schneckendrehzahl und/oder des Düsenspaltes nach einem der bekannten Verfahren ausgeführt sein kann.

Erfindungsgemäß wird die Extrusionszeit bei der Herstellung der Vorformlinge als Qualitätsmerkmal der aus dem Vorformling hergestellten Hohlkörper herangezogen. Die für die Lage der Vorformlinge in der Blasform entscheidende Zeit wird erfaßt und ausgewertet. Maßgebend ist die Abweichung der Extrusionszeit von einem vorgegebenen, auf das Wanddickenprogramm abgestimmten Sollwert.

Für die weitere Ausgestaltung des erfindungsgemäßen Verfahrens bestehen verschiedene Möglichkeiten. Gemäß einer ersten Ausführungsform wird die für den Sollwertvergleich eingesetzte Extrusionszeit von einer Meßeinrichtung erfaßt, die nahe der Unterkante der vollständig extrudierten Vorformlinge positioniert ist. Der Abstand der Meßeinrichtung von dem Düsenspalt wird so gewählt, daß auch dann, wenn der Vorformling nicht die Soll-Länge erreicht noch ein Meßsignal abgegeben wird.

Eine andere vorteilhafte Ausführung des erfindungsgemäßen Verfahrens sieht vor, daß die für den Sollwertvergleich eingesetzte Extrusionszeit von einer Meßeinrichtung erfaßt wird, deren Abstand von dem Düsenspalt so bemessen ist, daß dieser Abstand der Soll-Länge eines Vorformling-Abschnittes von der Vorformlingsunterkante oder einer Referenzmarkierung bis zu einem kritischen Vorformlingsquerschnitt, der einem Funktionsmaxium des Wanddickenprogramms zugeordnet ist, entspricht. Bei dieser Ausführung des erfindungsgemäßen Verfahrens ist der Extrusionszeitmeßwert einem Funktionsmaxium des Wanddickenprogramms unmittelbar zugeordnet. Entspricht der Extrusionszeitmeßwert exakt dem Sollwert, so wird genau zu diesem Zeitpunkt ein Vorformlingsabschnitt extrudiert, der in der Blasform einer besonders starken Reckung unterliegt.

Eine weitere Ausgestaltung der Erfindung sieht vor, daß die für den Sollwertvergleich eingesetzte Extrusionszeit von einer Meßeinrichtung erfaßt wird, die mindestens zwei in Extrusionsrichtung untereinander angeordnete Signalgeber aufweist. Mit Hilfe der entlang des Extrusionsweges angeordneten Signalgeber ist eine Lagekontrolle, Längeneinstellung oder Längenregelung des Vorformlings möglich. Durch zwei oder mehr untereinander angeordnete Signalgeber und einen Extrusionszeitvergleich zwischen dem Start und diesen Signalgebern können Betriebsparameter zum Ausgleich von Durchhängung und/oder Schrumpfung ermittelt werden.

Wenn die Zeitmessung nicht am Ende des Vorformlings, also nach vollständigem Ablauf der Extrusion, erfolgt, muß durch eine Überwachung sichergestellt werden, daß die Restextrusion des Vorfomlings nach der Messung nicht noch gestört wurde. In weiterer Ausgestaltung lehrt die Erfindung deshalb, daß der programmkonforme Ablauf der Restextrusion überprüft wird und ein Störsignal abgegeben wird, wenn bei der Restextrusion des Vorformlings eine Störung auftritt, wobei der aus dem betreffenden Vorformling gefertigte Hohlkörper aufgrund des Störsignals ausgeschleust wird. Die Überwachung der Restextrusion ist auf verschiedene Weise möglich. Nach bevorzugter Ausführungsform der Erfindung ist zur Überwachung der Restextrusion eine Zeitmeßeinrichtung nahe der Unterkante des vollständig extrudierten Vorformlings angeordnet, wobei die Zeitmeßeinrichtung das Störsignal auslöst, wenn der Zeitmeßwert vorgegebene Grenzwerte erreicht. Die Grenzwerte definieren ein Toleranzfeld, das vorzugsweise breiter bemessen ist als das zuvor erläuterte betriebliche Toleranzfeld.

In weiterer Ausgestaltung lehrt die Erfindung, daß die Unterkante der Vorformlinge durch mindestens eine Lichtschranke erfaßt wird, welche die Zeitmessung der Extrusionszeit stoppt. Vorzugsweise sind mehrere Lichtschranken horizontal nebeneinander angeordnet, wobei die von den Lichtschranken gestoppten Zeitmeßwerte miteinander verglichen werden und ein dem Vorformling zugeordnetes Fehlersignal gespeichert wird, wenn die Zeitdifferenzen zwischen den gestoppten Zeitmeßwerten außerhalb eines vorgegebenen Toleranzbereiches liegen. Das Fehlersignal kann zum Ausschleusen des aus dem betreffenden Vorformling geformten Hohlkörpers und/oder als Regelgröße zur Veränderung eines Betriebsparameters des Extrusionsblasverfahrens verwendet werden. Die zeitliche Abfolge der dem Fehlersignal zugrundeliegenden Meßsignale lassen Rückschlüsse auf die Form der Vorformlingsunterkante zu und erlauben das Erkennen von betrieblichen Störungen. Ein störender Schlauchschieflauf ist ebenso identifizierbar wie eine zu große oder zu geringe Stützluftmenge. Nach bevorzugter Ausführung des erfindungsgemäßen Verfahrens wird daher nach Maßgabe der zeitlichen Abfolge der dem Fehlersignal zugrundeliegenden Meßsignale die Stützluftmenge oder ein schiefer Schlauchlauf korrigiert. Eine große Meßgenauigkeit und sichere Auswertung der Meßsignale ist insbesondere dann gewährleistet, wenn die Lichtschranken in Gruppen angeordnet sind, die horizontal unter einem Winkel von vorzugsweise 90° zueinander ausgerichtet sind und jeweils mindestens zwei parallele Lichtschranken umfassen. Die Meßsignale werden in der vorstehend beschriebenen Weise ausgewertet. Außerdem kann durch Mittelwertbildung der von der Lichtschranke gestoppten Zeitmeßwerte die für den Sollwertvergleich eingesetzte Extrusionszeit bestimmt werden.

Es versteht sich, daß anstelle von Lichtschranken in entsprechender Weise auch andere Meßeinrichtungen zur Erfassung der Vorformlingsunterkante und/oder einer an dem Vorformling angebrachten Markierung eingesetzt werden können, deren Meßsignale in der beschriebenen Weise ausgewertet werden. Die Zeitmessung kann schließlich synchron, oder auch zeitlich versetzt mit Beginn des Arbeitstaktes oder durch ein Meßsignal einer unterhalb des Düsenspaltes angeordneten optischen Meßeinrichtung, die z. B. eine Markierung auf dem Vorformling oder die Vorformlingsunterkante erfaßt, gestartet werden.

In weiterer Ausgestaltung lehrt die Erfindung, daß zu den Sollwertabweichungen der Vorformling in bezug auf die Extrusionszeit Häufigkeitsverteilungen erstellt und gespeichert werden und daß das betriebliche Toleranzfeld in Abhängigkeit von der geltenden Häufigkeitsverteilung verändert wird. Die Breite des Toleranzfeldes wird reduziert, wenn die Sollwertabweichung im statistischen Mittel kleiner wird. Entsprechend nimmt die Breite des Toleranzfeldes wieder zu, wenn die mittlere Sollwertabweichung größer wird. Die Funktion ist vorzugsweise in einem Rechner gespeichert, und die betriebliche Anpassung des Toleranzfeldes erfolgt automatisch. Es versteht sich, daß obere und untere Grenzwerte für die Anpassung des betrieblichen Toleranzfeldes eingerichtet sein sollten.

Beim Anfahren einer Extrusionsblasformanlage sind zunächst erhebliche Sollwertabweichungen der Extrusionszeit zu erwarten. Sobald die Blasformanlage voll ausgeregelt ist und einen stationären Betriebspunkt erreicht hat, ist die mittlere Sollwertabweichung der Extrusionszeit im allgemeinen kleiner. Das betriebliche Toleranzfeld ist entsprechend anzupassen. Während der Anfahrphase oder einem Material-, Chargen- oder Farbwechsel ist es zweckmäßig, unter Inkaufnahme eines etwas erhöhten Materialbedarfes die mittlere Wandstärke der Vorformlinge und damit das Gewicht der Hohlkörper um einige Prozentpunkte zu vergrößern, um sicherzustellen, daß auch bei einem breiteren betrieblichen Toleranzfeld und größeren zulässigen Sollwertabweichungen der Extrusionszeit die geforderten Festigkeitseigenschaften der Hohlkörper erreicht werden. Bei einem Verfahren zum Extrusionsblasformen von Hohlkörpern, bei dem das Gewicht der Hohlkörper gemessen und nach Maßgabe eines Referenzgewichtes durch Verstellung des Düsenspaltes und/oder der Extruderdrehzahl geregelt wird, lehrt die Erfindung in weiterer vorteilhafter Ausgestaltung, daß das Referenzgewicht in Abhängigkeit von der Breite des betrieblichen Toleranzfeldes verändert wird, wobei einem schmalen Tolerenzfeld ein kleineres Referenzgewicht und einem breiten Tolerenzfeld ein größeres Referenzgewicht zugeordnet ist. Eine Anhebung des Referenzgewichtes um einige Prozentpunkte gegenüber einem Sollgewicht, welches bei voll ausgeregelter Blasformanlage und stationärer Betriebszustand angestrebt wird, ist für den Anfahrvorgang zweckmäßig. Die Abhängigkeit zwischen dem Referenzgewicht, dem betrieblichen Toleranzfeld sowie der Häufigkeitsverteilung der Sollwertabweichung ist durch empirische Funktionen faßbar und zweckmäßigerweise in einem Rechner gespeichert. Bei der Abgabe des Signals zum Ausschleusen fehlerbehafteter Hohlkörper werden die im Rechner abgelegten Funktionen berücksichtigt.

Die Sollwertabweichung der Extrusionszeit von dem vorgegebenen Sollwert ist zusätzlich auch als Regelgröße zur Regelung der Extrusionsparameter einsetzbar und erfüllt insofern eine weitere Funktion. Nach bevorzugter Ausführungsform der Erfindung wird nach Maßgabe der Sollwertabweichung die Schneckendrehzahl und/oder der Düsenspalt in einem der folgenden Arbeitstakte verändert. Im Rahmen der Erfindung liegt es, daß schon im Takt der Vorformlingsbildung eine Stellgröße für die Lagekorrektur des Vorformlings aktiviert wird, wenn die Sollwertabweichung der gemessenen Extrusionszeit einen vorgegebenen Grenzwert übersteigt, wobei für die Messung der Extrusionszeit eine der schon beschriebenen Meßeinrichtungen verwendet wird, die entlang des Extrusionsweges mit Abstand von der Vorformlingsunterkante des vollständig extrudierten Vorformlings angeordnet ist. Die Stellgröße für die Lagekorrektur des Formformlings ist dem Betrag nach so bemessen, daß der einem Funktionsmaximum des Wanddickenprogramms zugeordnete Vorformlingsquerschnitt in der Blasform dort positioniert ist, wo eine dem Funktionsmaximalwert zugeordnete maximale Reckung beim Blasvorgang auftritt. Schließlich empfiehlt die Erfindung, daß die Sollwertabweichung der Extrusionszeit zusammen mit dem Istwert der Schneckendrehzahl und/oder der Drehzahländerung sowie dem Istwert für den Düsenspalt und/oder der Düsenspaltänderung unter Zuordnung zum Vorformling und daraus hergestelltem Hohlkörper in einem Rechner gespeichert wird. Liegen die Sollwertabweichungen weit außerhalb des betrieblichen Toleranzfeldes, so ist eine Überprüfung geboten. In einem solchen Fall, wenn die Sollwertabweichung außerhalb des betrieblichen Toleranzfeldes liegende Grenzwerte erreicht, wird daher nach bevorzugter Ausführung der Erfindung ein optisches und/oder akustisches Störsignal ohne Zeitverzögerung abgegeben.

Im folgenden wird die Erfindung anhand einer lediglich ein Ausführungsbeispiel darstellenden Zeichnung ausführlich erläutert. Es zeigen in schematischer Darstellung
- Fig. 1: ein Anlagenschema zum Extrusionsblasformen von Hohlkörpern aus thermoplastischem Kunststoff,
- Fig. 2: die Häufigkeitsverteilung für die Sollwertabweichung an einer voll ausgeregelten Blasformanlagen,
- Fig. 3: die Verstellung des Düsenspaltes bei ablaufendem Wanddickenprogramm,
- Fig. 4: eine der Vorformlingsunterkante zugeordnete Meßeinrichtung,
- Fig. 5: den Schnitt A-A in Fig. 4, und
- Fig. 6: eine weitere Ausgestaltung des in Fig. 1 dargestellten Anlagenschemas.

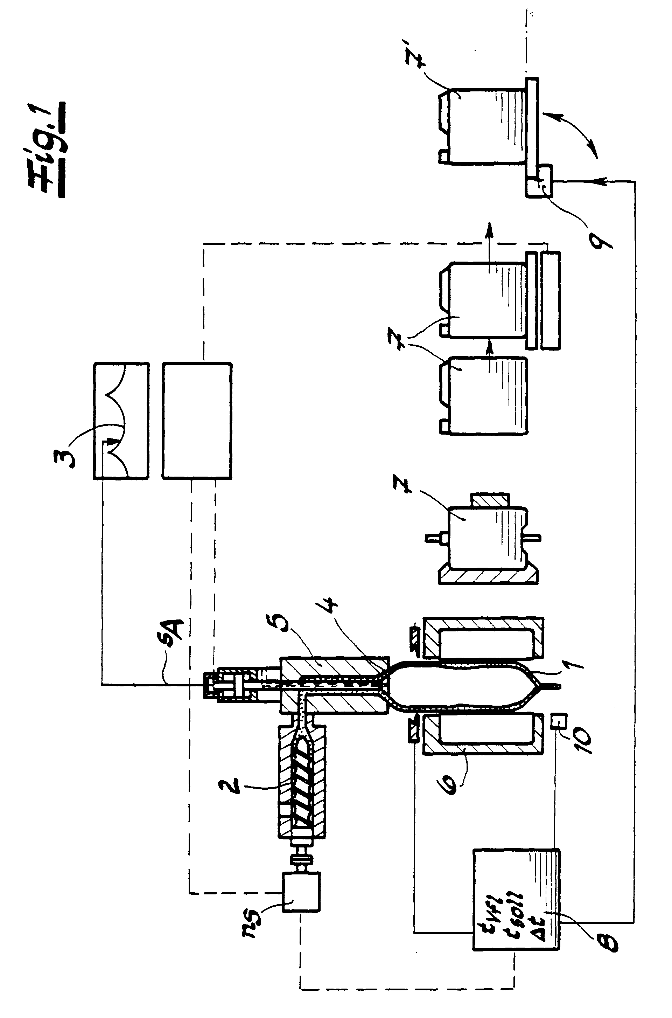

Dem in Fig. 1 dargestellten Anlagenschema entnimmt man, daß schlauchförmige Vorformlinge 1 mittels eines Schneckenextruders 2 aus dem nach Maßgabe eines Wanddickenprogramms 3 gesteuerten Düsenspalt 4 eines Strangpreßkopfes 5 extrudiert werden. In darauf folgenden Arbeitstakten werden die extrudierten Vorformlinge 1 in einer Blasform 6 zu Hohlkörpern 7 aufgeweitet, die Hohlkörper 7 ausgeformt und anhaftende Abfallbutzen entfernt. Funktionsprüfungen, beispielsweise Wägungen und Dichtigkeitsprüfungen, können daran anschließen.

Im Ausführungsbeispiel werden ferner die Gewichte der Hohlkörper 7 gemessen und nach Maßgabe der Meßwerte wird eine Grundeinstellung des Düsenspaltes 4 geregelt. Ferner wird zu jedem Vorformling 1 die bis zum Erreichen einer vorgegebenen Schlauchlänge benötigte Extrusionszeit t_{Vfl} gemessen und deren Sollwertabweichung Δt von einem Sollwert t_{Soll} bestimmt. Eine Auswerteeinrichtung 8 prüft, ob die Sollwertabweichung Δ t außerhalb eines vorgegebenen betrieblichen Tolerenzfeldes t_{Tol2-}, t_{Tol2+} liegt. Ist dies der Fall, so wird ein dem Vorformling 1 zugeordnetes Signal gespeichert. Das Signal steuert eine Sortiervorrichtung 9 zum Ausschleusen fehlerbehafteter Hohlkörper 7. Das Signal spricht an, wenn ein Hohlkörper 7' die Sortiervorrichtung 9 erreicht, der aus einem mit dem Signal belegten Vorformling aufgeweitet wurde. Durch das Signal wird der betreffende Hohlkörper ausgeschleust.

Die Zeitmessung der Extrusionszeit wird im Ausführungsbeispiel synchron mit dem Beginn des Arbeitstaktes gestartet.

Die Extrusionszeit t_{vfl} (Ist-Zeit) wird von einer Meßeinrichtung 10 erfaßt, die nahe der Unterkante der vollständig extrudierten Vorformlinge 1 positioniert ist. Der Abstand von dem Düsenspalt ist so gewählt, daß auch dann, wenn die tatsächliche Vorformlinglänge etwas kürzer ist als die Soll-Länge, ein Meßsignal abgegeben wird. Die Meßeinrichtung umfaßt mehrere Lichtschranken, die horizontal versetzt angeordnet sind. Durch Mittelwertbildung der von den Lichtschranken gestoppten Zeitmeßwerte wird die für den Sollwertvergleich eingesetzte Extrusionszeit t_{Vfl} bestimmt. Auf diese Weise können Meßfehler aufgrund von Unregelmäßigkeiten an der Unterkante des Vorformlings 1 weitestgehend eliminiert werden.

Nach Maßgabe der Sollwertabweichung Δ t wird auch die Schneckendrehzahl n_{S} im folgenden Arbeitstakt verändert. Die Schneckendrehzahl und die Grundeinstellung s_{A} des Düsenspaltes stellen die Regelgrößen dar, um das Hohlkörpergewicht sowie die Position des Vorformlings relativ zur Blasform 6 zu korrigieren. Die Bewegung der Blasform wird bei dem im Ausführungsbeispiel erläuterten Verfahren mit zeitkonstantem Takt, also zeitstarr, gesteuert.

Liegt der Zeitmeßwert der Extrusionszeit t_{Vfl} (Ist-Wert) weit außerhalb des betrieblichen Toleranzfeldes, so ist eine Überprüfung des Verfahrens erforderlich. In diesem Fall wird ein optisches und/oder akustisches Störsignal ohne Zeitverzögerung abgegeben. Die Abgabe des Störsignals erfolgt, wenn die Sollwertabweichung außerhalb des betrieblichen Toleranzfeldes liegende Grenzwerte t_{Tol3-}, t_{Tol3+} erreicht.

Die anliegende Tabelle zeigt anhand von Beispielen Betriebszustände, die bei dem erfindungsgemäßen Verfahren auftreten können und die dann resultierenden Verfahrensmaßnahmen. Es wird angenommen, daß der Sollwert t_{Soll} für die Extrusionszeit 12,0 sec. beträgt. Liegt die gemessene Extrusionszeit t_{Vfl} in einem Bereich von 11,9 bis 12,1 sec., so nimmt der Vorformling die vorbestimmte Lage relativ zur Blasform ein. Verdickte Wandabschnitte des Vorformlings, denen Funktionsmaxima des Wanddickenprogramms zugeordnet sind, sind in Blasformbereichen positioniert, in denen die größte Reckung auftritt. Die aus diesen Vorformlingen gefertigen Hohlkörper haben die geforderten Eigenschaften. Liegt die gemessene Extrusionszeit in einem Toleranzfeld zwischen t_{Tol2-} (11,6 sec.) und t_{Tol2+} (12,4 sec.), aber außerhalb des dem Sollwert t_{Soll} zugerechneten Bandes von 11,9 bis 12,1 sec., so nimmt der Vorformling eine noch akzeptable Lage in der Blasform ein und der daraus gefertigte Hohlkörper ist brauchbar. Jedoch wird nach Maßgabe der Sollwertabweichung Δt eine Regelung der Schneckendrehzahl n_{S} vorgenommen und werden die Extrusionsparameter, im Ausführungsbeispiel die Schneckendrehzahl n_{S}, auf diese Weise korrigiert. Liegt die Sollwertabweichung Δ t außerhalb des durch t_{Tol2-} und t_{Tol2+} vorgegebenen betrieblichen Toleranzfeldes t_{Tol2-}, t_{Tol2+}, so wird ein dem Vorformling zugeordnetes Signal gespeichert. Das Signal steuert in der beschriebenen Weise eine Sortiervorrichtung zum Ausschleusen fehlerbehafteter Hohlkörper, wenn der betreffende Hohlkörper die Sortiervorrichtung erreicht hat. Nach Maßgabe der Sollwertabweichung Δ t erfolgt auch hier eine Regelung der Schneckendrehzahl. Erreicht die Sollwertabweichung schließlich außerhalb des betrieblichen Toleranzfeldes liegende Grenzwerte t_{Tol3-}, t_{Tol3+}, so wird ein optisches und/oder akustisches Störsignal ohne Zeitverzögerung abgegeben und alle Hohlkörper werden ausgeschleust.

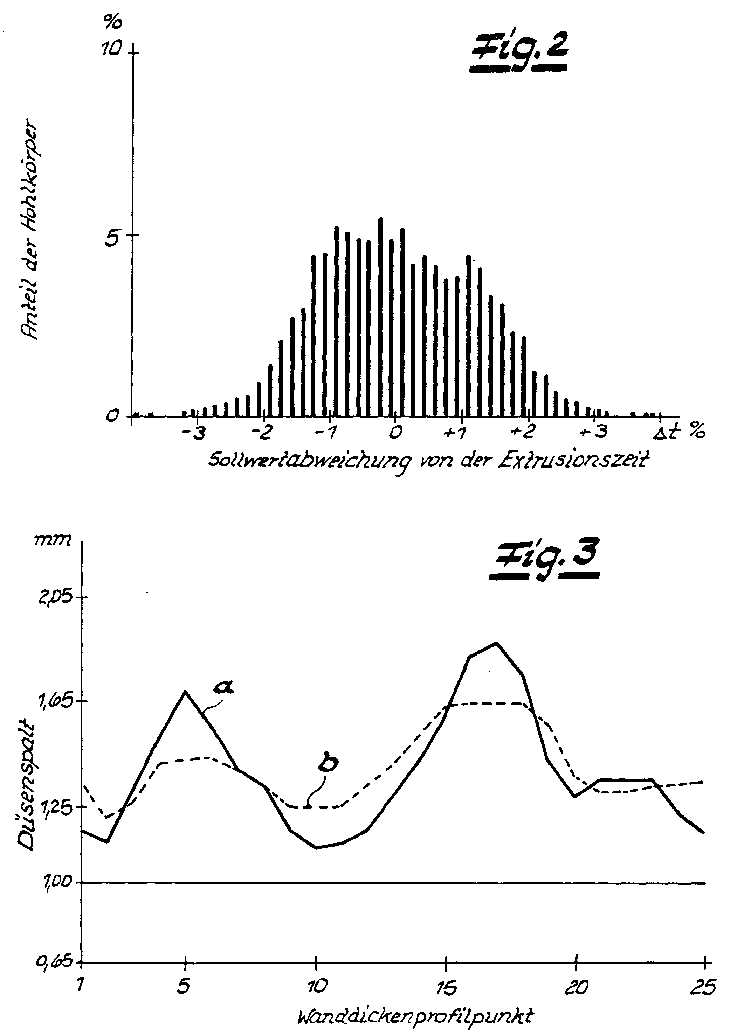

Die Fig. 2 zeigt beispielhaft die Häufigkeitsverteilung für die Sollwertabweichung an einer voll ausgeregelten Blasformanlage. Ausgewertet wurden insgesamt 4373 Kanister (10 l). Obwohl eine nach dem Stand der Technik bekannte Regelung der Schneckendrehzahl sowie des Düsenspaltes fallen nur 60,2 % aller Meßwerte in ein Toleranzfeld mit den Grenzwerten ± 1 %. 6,2 % aller Meßwerte liegen außerhalb eines breiteren Toleranzfeldes von ± 2 %, und 0,8 % aller Meßwerte liegen sogar außerhalb eines Toleranzfeldes von ± 3 %. Legt man die Grenzwerte ± 3 % als betriebliches Toleranzfeld fest, so werden nach dem erfindungsgemäßen Verfahren 0,8 % der Hohlkörper als fehlerbehaftete Hohlkörper ausgeschleust.

Die Fig. 3 zeigt die Verstellung des Düsenspaltes bei ablaufendem Wanddickenprogramm. Das Wanddickenprogramm unterteilt das Vorformlingsvolumen in 25 äquidistant verteilte Wanddickenprofilpunkte. Das Wanddickenprogramm weist auf schmale Bereiche beschränkte, ausgeprägte Funktionsmaxima auf, die Vorformlingsbereichen zugeordnet sind, die in der Blasform stark gereckt werden. Die ausgeprägten Funktionsmaxima sind erforderlich zur Erreichung hoher Stauchwerte bei minimalem Einsatzgewicht. Je extremer die Funktionsmaxima ausgeprägt sind, um so schwieriger ist die Einhaltung zwingend vorgeschriebener Mindeststauchwerte bei schwankender Vorformlingslänge. Das Profil a zeigt das Wanddickenprogramm, welches bei dem erfindungsgemäßen Verfahren einsetzbar ist. Eine gut ausgeregelte Blasformanlage, bei der sich für die Sollwertabweichung der Extrusionszeit die in Fig. 2 angegebenen Häufigkeitsverteilung einstellt, ist vorausgesetzt. Das betriebliche Toleranzfeld ist mit ± 3 % festgelegt. 0,8 % der Hohlkörper werden ausgeschleust. Da die außerhalb des betrieblichen Toleranzfeldes fassenden Hohlkörper ausgeschleust werden, kann das Wanddickenprogramm mit extremen Funktionsmaxima betrieben werden, ohne daß die Gefahr besteht, daß bei einzelnen Hohlkörpern die vorgeschriebenen Mindeststauchwerte nicht erreicht werden. Die Kurve b zeigt für die in gleicher Weise ausgeregelte Blasformanlage unter Zugrundelegung ebenfalls der in Fig. 2 angegebenen Häufigkeitsverteilung ein Wanddickenprogramm, welches so verschliffen ist, daß alle Hohlkörper die geforderten Mindeststauchwerte erreichen. Dabei wird vorausgesetzt, daß keine Hohlkörper ausgeschleust werden. Die Kurve b zeigt den Stand der Technik. Das verschliffene Wanddickenprofil hat einen größeren Materialbedarf zur Folge, denn die Hohlkörper weisen im Mittel eine unnötig große Wandstärke auf.

Die Fig. 2 zeigt die Häufigkeitsverteilung der Sollwertabweichung von der Extrusionszeit für eine gut ausgeregelte Blasformanlage im stationären Betriebszustand. Beim Anfahren einer Blasformanlage ist die mittlere Sollwertabweichung regelmäßig größer. Für den Anfahrvorgang empfiehlt die Erfindung, daß zu den Sollwertabweichungen der Vorformlinge Häufigkeitsverteilungen erstellt und gespeichert werden und daß das betriebliche Toleranzfeld in Abhängigkeit von der geltenden Häufigkeitsverteilung verändert wird. Mit der Verbreiterung des betrieblichen Toleranzfeldes sollte in der Anfahrphase oder bei einem Material-, Chargen- oder Farbwechsel auch eine etwas größere mittlere Wandstärke des Vorformlings eingestellt werden, um sicherzustellen, daß bei den größeren zulässigen Sollwertabweichungen auch die geforderten Festigkeitseigenschaften sicher erreicht werden. Bei einem Verfahren, bei dem das Gewicht der Hohlkörper gemessen und nach Maßgabe eines Referenzgewichtes durch Verstellung des Düsenspaltes und/oder der Extruderdrehzahl geregelt wird, empfiehlt die Erfindung, daß das Referenzgewicht in Abhängigkeit von der Breite des betrieblichen Toleranzfeldes verändert wird, wobei einem schmalen Toleranzfeld ein kleineres Referenzgewicht und einem breiten Toleranzfeld ein größeres Referenzgewicht zugeordnet ist. Die Abhängigkeit zwischen der Breite des betrieblichen Toleranzfeldes, des Referenzgewichtes und der Häufigkeitsverteilung kann durch empirische Funktionen berücksichtigt werden, die in einem Rechner gespeichert sind.

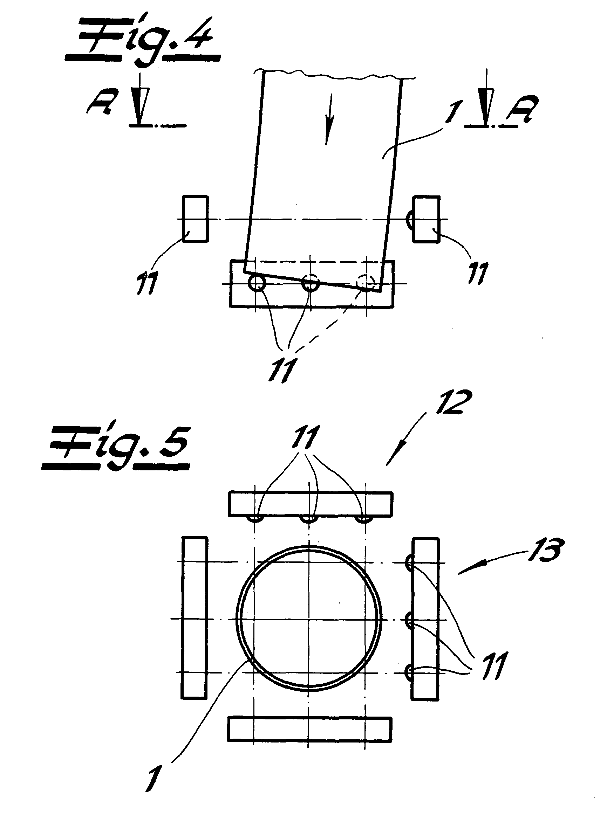

Die Meßeinrichtung 10 umfaßt eine Mehrzahl von Lichtschranken 11, die horizontal nebeneinander angeordnet sind. Bei einer vergleichenden Betrachtung der Fig. 4 und 5 entnimmt man, daß die Lichtschranken 11 in Gruppen 12, 13 angeordnet sind, die horizontal unter einem Winkel von vorzugsweise 90° zueinander ausgerichtet sind und jeweils mindestens zwei parallele Lichtschranken umfassen. Im Ausführungsbeispiel sind die Gruppen 12, 13 in unterschiedlichen horizontalen Ebenen angeordnet. Lichtschranken sollen im Rahmen der Erfindung Fotosensoren ebenso wie andere berührungslos arbeitenden Meßeinrichtungen, die zur Positionserfassung des Vorformlings geeignet sind, umfassen. Die von den Lichtschranken 11 gestoppten Zeitmeßwerte werden miteinander verglichen, und es wird ein dem Vorformling zugeordnetes Fehlersignal gespeichert, wenn die Zeitdifferenzen zwischen den gestoppten Zeitmeßwerten außerhalb eines vorgegebenen Toleranzbereiches liegen. In Fig. 4 ist beispielsweise ein störender Schlauchschieflauf dargestellt. Aus der zeitlichen Abfolge der dem Fehlersignal zugrundeliegenden Meßsignale ist diese Störung erkennbar und kann somit dem Bedienungspersonal optisch und/oder akustisch angezeigt und/oder durch Eingriff in das Regelverfahren korrigiert werden. Ein störender Schlauchschieflauf mindert die Qualität des aus dem betreffenden Vorformling 1 gefertigten Hohlkörpers 7. Folglich wird das Fehlersignal ebenfalls zum Ausschleusen des aus dem betreffenden Vorformling 1 geformten Hohlkörpers 7 verwendet. Zusätzlich kann das Fehlersignal auch als Regelgröße zur Veränderung eines Betriebsparameters des Extrusionsblasverfahrens verwendet werden, z. B. zur Änderung der Temperatur eines oder mehrerer Heiz- oder Kühlsegmente des Strangpreßkopfes 5 oder Heiz- oder Kühleinrichtungen am Vorformling 1. Nicht nur ein störender Schlauchschieflauf sondern auch eine von dem Sollwert abweichende Stützluftmenge ist mit Hilfe der aus mehreren Lichtschranken 11 bestehenden Meßeinrichtung 10 erfaßbar und kann durch Eingriff in das Regelverfahren von Hand oder ggf. auch automatisch korrigiert werden.

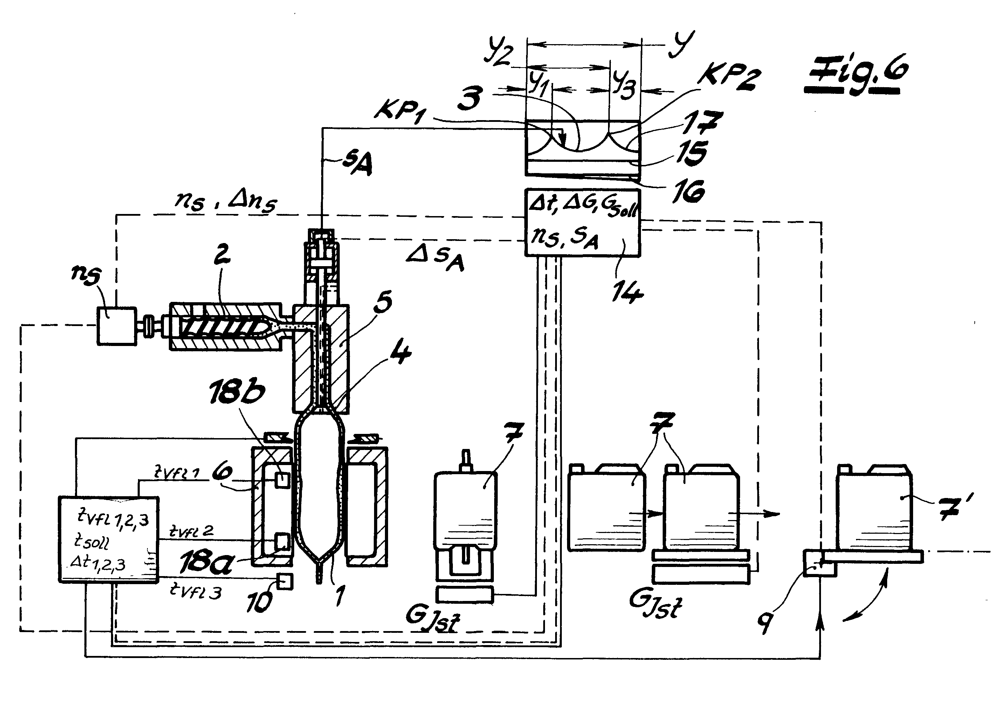

Bei dem in Fig. 6 dargestellten Anlagenschema sind in der Vorformlingsextrusionsrichtung zum Zwecke der Lagekontrolle, Längeneinstellung oder Längenregelung zusätzlich zu der unteren Meßeinrichtung 10 weitere Meßeinrichtungen 18a, 18b vorgesehen. Die Sollwertabweichung Δt der Extrusionszeit wird zusammen mit den Istwerten für die Drehzahl n_{S} des Schneckenextruders 2 und den Düsenspalt s_{A} in einem Rechner 14 gespeichert. Die Speicherung erfolgt unter Zuordnung zum Vorformling 1 und dem daraus hergestellten Hohlkörper. Außerdem werden die Gewichte G_{Ist} der Hohlkörper 7 gemessen, und zwar deren Bruttogewichte G_{B} oder deren Nettogewichte G_{N} oder des unteren Bruttogewichtes. Dabei festgestellte Gewichtsabweichungen ΔG von einem vorgegebenen Sollgewicht G_{Soll} werden mit den zugeordneten, gespeicherten Sollwertabweichungen Δt der Extrusionszeit t_{Ist} paarweise als Regelabweichungen für die Festlegung erforderlicher Drehzahl- und Düsenspaltkorrekturen Δn_{S}, Δs_{A} eingesetzt. Aus den gespeicherten Drehzahl- und Düsenspaltwerten sowie den ermittelten Drehzahl- und Düsenspaltkorrekturen Δn_{S}, Δs_{A} werden die Betriebsparameter n_{S}, s_{A} für die Extrusion im folgenden Arbeitstakt festgelegt.

Das Wanddickenprogramm 3 unterteilt das Vorformlingsvolumen in n äquidistant verteilte Wanddickenprofilpunkte. Vorzugsweise wird mit n = 25 Wanddickenprofilpunkten gearbeitet. Die Pogrammkurve des Wanddickenprogramms 3 weist auf schmale Bereiche beschränkte, ausgeprägte Funktionsmaxima KP1, KP2 im Abstand y1, y2 (von dem in Extrusionsrichtung vorderen Ende des Vorformlings betrachtet) auf, die Vorformlingsbereichen zugeordnet sind, die in der Blasform stark gereckt werden. Diese Vorformlingsquerschnitte heißen daher auch kritische Querschnitte. Die Programmkurve des Wanddickenprogramms 3 setzt sich im Ausführungsbeispiel zusammen aus einem gleichmäßigen Grundspalt 15, einer Rampe 16 und einer Profilkurve 17. Die Rampe 16 vergrößert vom Beginn der Vorformlingsextrusion an den Düsenspalt 4 des Strangpreßkopfes 5 kontinuierlich. Die Rampe 16 trägt dazu bei, ein Durchhängen des Vorformlings 1 aufgrund des längenabhänigen Gewichtes zu kompensieren.

Die beiden Meßeinrichtungen 18a, 18b sind den kritischen Punkten KP1, KP2 zugeordnet und in einem dem Kurvenabschnitt y2-y1 der Programmkurve korrespondierenden Abstand angeordnet. Die Meßeinrichtungen 10, 18a sind in einem Abstand angeordnet, der dem Programmkurvenabschnitt y3 zugeordnet ist. Erreicht der Vorformling 1 beim Extrusionsvorgang die Meßeinrichtung 18a, so wird zu diesem Zeitpunkt der kritische Vorformlingsquerschnitt KP2 im Düsenspalt 4 produziert.

Wird die Lageregelung nicht auf den hauptkritischen Punkt KP2 sondern auf die Vorformlingslänge nach fast vollständiger Extrusion des Vorformling 1 angelegt und wird eine Verschiebung des kritischen Querschnittes KP2 relativ zur Blasform festgestellt, obwohl die Gewichts- und Extrusionszeitmeßwerte den Sollwerten entsprechen, so sind zum Zwecke der Feinkorrektur folgende Korrekturmaßnahmen allein oder in Kombination möglich:
- Relativbewegung zwischen der Blasform und dem Vorformling ändern;
- Ablauf des Wanddickenprogramms relativ zum Vorformling verschieben;
- Einformzeit ändern oder eine andere vergleichbare Zeitkorrektur vornehmen;
- Länge des Abschnitt y3 der Programmkurve korrigieren.

Die vorstehend beschriebenen Maßnahmen sind auch möglich, um die Restextrusion des dem Programmabschnitt y3 zugeordneten Vorformlingsabschnittes zu steuern.

Änderungen in bezug auf die Durchhängung stellen nach Schwankungen der Schwellung und Förderleistung bei konstanten Maschinenbedingungen die nächst größere Störgröße dar. Die Durchhängung ist in erster Näherung eine Funktion des momentanen Vorformlingsgewichtes und des Düsenspaltquerschnittes. Die Störgrößen sind unterschiedliche Materialeigenschaften und unterschiedliche Massetemperatur. Je extremer das Wanddickenprofil im Vorformling eingestellt werden muß, desto schwieriger ist die Durchhängung beispielsweise durch eine linear steigende Rampe auszugleichen. Wenn die Materialverteilung im Hohlkörper unbefriedigend ist, obwohl die Extrusionszeitmeßwerte und die zugeordneten Gewichtsmeßwerte den Sollwerten entsprechen, sind Feinkorrekturen an Betriebseinstellungen der Blasformanlage zweckmäßig, wobei verschiedene Maßnahmen möglich sind. Als erste Verbesserung empfiehlt die Erfindung den Anteil des Profilfaktors und somit der Profilkurve im Verhältnis zum Grundspalt zu modifizieren. Der Profilfaktor wird mit den Funktionswerten der Programmkurve multipliziert und streckt oder staucht diese. Der Profilfaktor kann die Verwendung eines Grundspaltes ersetzen. Eine weitere Verbesserung kann darin bestehen, daß der Profilfaktor mit einer linear oder exponentiell steigenden Rampe verwendet wird. Schließlich ist es möglich, die Durchhängung näherungsweise durch eine beliebige Kombination aus
a) einer linear steigenden Rampe,
b) einer exponentiell steigenden Rampe,
c) einem modifizierten Profilfaktor im Verhältnis zum Grundspalt,
d) einem Düsenspaltfaktor gleich Summe aus Grundspalt und Profilkurve multipliziert mit einem Profilfaktor,
e) einem reziproken Düsenspaltfaktor
zu beschreiben.

Optimal wäre die Durchhängung durch ein weiteres Programmfeld ähnlich dem Wanddickenprogramm, welches auch synchron zu diesem abläuft, zu jedem Wanddickenpunkt separat einzugeben. Erforderliche Änderungen sind als ein Bruchteil der ermittelten Kurve automatisch addierbar oder subtrahierbar.

Werden Meßeinrichtungen 10, 18a und 18b, wie in der Fig. 6 angegeben, eingesetzt, so können bei Aufteilung des Wanddickenprogramms in Abschnitte ein oder mehrere Abschnitte y1/y2, y1/y3 geregelt werden. Ferner kann die Vorformlingslänge oder die Stützluftmenge und/oder der Stützluftdruck bei geringerem Abstand y2-y1 vergrößert und bei größerem Abstand entsprechend verkleinert werden. Ist der Abstand y2-y1 zu klein, so ist eine Korrektur dadurch möglich, daß der Profilfaktor verkleinert und der Grundspalt vergrößert oder die Rampe vergrößert wird. Umgekehrte Abhängigkeiten ergeben sich, wenn der Abstand y2-y1 zu groß ist.

## Patentansprüche

1. Verfahren zum Extrusionsblasformen von Hohlkörpern aus thermoplastischem Kunststoff, bei dem
schlauchförmige Vorformlinge (1) mittels eines Schneckenextruders (2) aus dem nach Maßgabe eines Wanddickenprogramms (3) gesteuerten Düsenspalt (4) eines Strangpreßkopfes (5) extrudiert und in folgenden Arbeitstakten
die extrudierten Vorformlinge (1) in einer Blasform (6) zu Hohlkörpern (7) aufgeweitet,
die Hohlkörper (7) ausgeformt und anhaftende Abfallbutzen entfernt werden,
wobei ferner zu jedem Vorformling (1) die bis zum Erreichen einer vorgegebenen Schlauchlänge benötigte Extrusionszeit (t_{Vfl}) gemessen und deren Sollwertabweichung (Δt) von einem Sollwert (tₛₒₗₗ) bestimmt wird, **dadurch gekennzeichnet,** daß ein dem Vorformling (1) zugeordnetes Signal gespeichert wird, wenn die Sollwertabweichung (Δt) der Extrusionszeit außerhalb eines vorgegebenen betrieblichen Toleranzfeldes (t_{Tol2-}, t_{Tol2+}) liegt, und daß mit dem Signal eine Sortiervorrichtung (9) zum Ausschleusen fehlerbehafteter Hohlkörper (7') gesteuert wird.

2. Verfahren nach Anspruch 1, dadurch gekennzeichnet, daß die für den Sollwertvergleich eingesetzte Extrusionszeit (t_{Vfl}) von einer Meßeinrichtung (10) erfaßt wird, die nahe der Unterkante der vollständig extrudierten Vorformlinge (1) positioniert ist.

3. Verfahren nach Anspruch 1, dadurch gekennzeichnet, daß die für den Sollwertvergleich eingesetzte Extrusionszeit (t_{Vfl}) von einer Meßeinrichtung (10) erfaßt wird, deren Abstand von dem Düsenspalt (4) so bemessen ist, daß dieser Abstand der Soll-Länge eines Vorformlingsabschnittes von der Vorformlingsunterkante oder einer Referenzmarkierung bis zu einem kritischen Vorformlingsquerschnitt, der einem Funktionsmaximum des Wanddickenprogramms (3) zugeordnet ist, entspricht.

4. Verfahren nach Anspruch 1, dadurch gekennzeichnet, daß die für den Sollwertvergleich eingesetzte Extrusionszeit (t_{Vfl1,2,3}) von einer Meßeinrichtung (10, 18a, 18b) erfaßt wird, die mindestens zwei in Extrusionsrichtung untereinander angeordnete Signalgeber aufweist.

5. Verfahren nach einem der Ansprüche 1 bis 4, dadurch gekennzeichnet, daß die Unterkante der Vorformlinge (1) durch mindestens eine Lichtschranke (11) erfaßt wird, welche die Zeitmessung der Extrusionszeit stoppt.

6. Verfahren nach Anspruch 5, dadurch gekennzeichnet, daß mehrere Lichtschranken (11) horizontal nebeneinander angeordnet sind, daß die von den Lichtschranken (11) gestoppten Zeitmeßwerte miteinander verglichen werden und daß ein dem Vorformling (1) zugeordnetes Fehlersignal gespeichert wird, wenn die Zeitdifferenzen zwischen den gestoppten Zeitmeßwerten außerhalb eines vorgegebenen Toleranzbereiches liegen.

7. Verfahren nach Anspruch 6, dadurch gekennzeichnet, daß das Fehlersignal zum Ausschleusen des aus dem betreffenden Vorformling (1) geformten Hohlkörpers (7') und/oder als Regelgröße zur Veränderung eines Betriebsparameters des Extrusionsblasverfahrens verwendet wird.

8. Verfahren nach Anspruch 7, dadurch gekennzeichnet, daß nach Maßgabe der zeitlichen Abfolge der dem Fehlersignal zugrundeliegenden Meßsignale die Stützluftmenge oder ein schiefer Schlauchlauf korrigiert wird.

9. Verfahren nach einem der Ansprüche 5 bis 8, dadurch gekennzeichnet, daß die Lichtschranken (11) in Gruppen (12, 13) angeordnet sind, die horizontal unter einem Winkel von vorzugsweise 90° zueinander ausgerichtet sind und jeweils mindestens zwei parallele Lichtschranken (11) umfassen.

10. Verfahren nach einem der Ansprüche 5 bis 9, dadurch gekennzeichnet, daß durch Mittelwertbildung der von den Lichtschranken gestoppten Zeitmeßwerte die für den Sollwertvergleich eingesetzte Extrusionszeit (t_{Vfl}) bestimmt wird.

11. Verfahren nach einem der Ansprüche 1 bis 4, dadurch gekennzeichnet, daß bei der Extrusion an der Außenseite des Vorformlings (1) eine Markierung angebracht wird und daß für die Messung der für den Sollwertvergleich eingesetzten Extrusionszeit (t_{Vfl}) eine die Markierung erfassende Meßeinrichtung verwendet wird.

12. Verfahren nach einem der Ansprüche 1 bis 11, dadurch gekennzeichnet, daß die Zeitmessung synchron mit dem Beginn des Arbeitstaktes oder durch ein Meßsignal einer unterhalb des Düsenspaltes (4) angeordneten optischen Meßeinrichtung gestartet wird.

13. Verfahren nach einem der Ansprüche 1 bis 12, dadurch gekennzeichnet, daß zu der Sollwertabweichung der Vorformlinge Häufigkeitsverteilungen erstellt und gespeichert werden und daß cas betriebliche Toleranzfeld (t_{Tol2-}, t_{Tol2+}) in Abhängigkeit von der geltenden Häufigkeitsverteilung verändert wird.

14. Verfahren nach einem der Ansprüche 1 bis 13, wobei das Gewicht der Hohlkörper gemessen und nach Maßgabe eines Referenzgewichtes durch Verstellung des Düsenspaltes (4) und/oder der Extruderdrehzahl (n_{S}) geregelt wird, dadurch gekennzeichnet, daß das Referenzgewicht in Abhängigkeit von der Breite des betrieblichen Toleranzfeldes verändert wird, wobei einem schmalen Tolerenzfeld ein kleineres Referenzgewicht und einem breiteren Toleranzfeld ein größeres Referenzgewicht zugeordnet ist.

15. Verfahren nach einem der Ansprüche 1 bis 14, dadurch gekennzeichnet, daß nach Maßgabe der Sollwertabweichung (Δt) der Extrusionszeit (t_{Vfl}) die Schneckendrehzahl (nₛ) und/oder der Düsenspalt (4) in einem der folgenden Arbeitstakte verändert wird.

16. Verfahren nach Anspruch 15, dadurch gekennzeichnet, daß die Sollwertabweichung (Δt) der Extrusionszeit (t_{Vfl}) zusammen mit dem Istwert der Schneckendrehzahl (n_{S}) und/oder der Drehzahländerung sowie dem Istwert für den Düsenspalt (4) und/oder der Düsenspaltänderung unter Zuordnung zum Vorformling (1) und daraus hergestelltem Hohlkörper (7) in einem Rechner (14) gespeichert werden.

17. Verfahren nach einem der Ansprüche 1 bis 16, dadurch gekennzeichnet, daß schon im Takt der Vorformlingsbildung eine Stellgröße für die Lagekorrektur des Vorformlings (1) aktiviert wird, wenn die Sollwertabweichung (Δt) der gemessenen Extrusionszeit (t_{Vfl}) einen vorgegebenen Grenzwert übersteigt, wobei für die Messung der Extrusionszeit (t_{Vfl}) eine Meßeinrichtung (10, 18a, 18b) verwendet wird, die entlang des Extrusionsweges mit Abstand von der Vorformlingsunterkante des vollständig extrudierten Vorformlings angeordnet ist.

18. Verfahren nach Anspruch 17, dadurch gekennzeichnet, daß die Stellgröße für die Lagekorrektur des Vorformlings (1) dem Betrag nach so bemessen ist, daß der einem Funktionsmaximum des Wanddickenprogramms (3) zugeordnete Vorformlingsquerschnitt in der Blasform (6) dort positioniert ist, wo eine dem Funktionsmaximalwert zugeordnete maximale Reckung beim Blasvorgang auftritt.

19. Verfahren nach einem der Ansprüche 15 bis 18, wobei die für den Sollwertvergleich eingesetzte Extrusionszeit (t_{Vfl}) von einer Meßeinrichtung (10) erfaßt wird, die nahe der Unterkante der vollständig extrudierten Vorformlinge (1) positioniert ist, dadurch gekennzeichnet, daß zum Zwecke einer Feinkorrektur die Relativbewegung zwischen der Blasform (6) und dem Vorformling (1) geändert und/oder der Ablauf des Wanddickenprogramms (3) relativ zum Vorformling (1) verschoben und/oder die Einformzeit geändert bzw. eine andere vergleichbare Zeitkorrektur vorgenommen und/oder im Wanddickenprogramm (3) die Länge des Programmkurvenabschnitts (y₃), der dem Abschnitt zwischen der Vorformlings-unterkante und einem in bezug auf die in der Blasform (6) später auftretende Reckung des Vorformlings (1) kritischen Querschnitt (KP2) des Vorformlings zugeordnet ist, verändert wird, wenn eine Verschiebung des kritischen Querschnitts (KP2) relativ zur Blasform (6) festgestellt wird, obwohl die Gewichts- und Extrusionszeitmeßwerte (G_{Ist}, t_{Vfl}) den Sollwerten (G_{Soll}, t_{Soll}) entsprechen.

20. Verfahren nach einem der Ansprüche 1 bis 18, dadurch gekennzeichnet, daß durch eine Meßeinrichtung mit mehreren in Extrusionsrichtung untereinander angeordneten Signalgebern (10, 18a, 18b) und durch einen Extrusionszeitvergleich der damit gemessenen Extrusionszeiten (t_{Vfl1}, t_{Vfl2}, t_{Vfl3}) Betriebsparameter zum Ausgleich von Durchhängung und/oder Schrumpfung ermittelt werden.

21. Verfahren nach einem der Ansprüche 15 bis 18, wobei die für den Sollwertvergleich eingesetzte Extrusionszeit (t_{Vfl}) von einer Meßeinrichtung (10, 18a, 18b) erfasst wird, die mindestens zwei in Extrusionsrichtung untereinander angeordnete Signalgeber aufweist, dadurch gekennzeichnet, daß zum Zwecke einer Feinkorrektur eine Korrektur der Programmkurve (15, 16, 17) vorgenommen wird, wenn die Sollwertabweichungen (Δt₁, Δt₂, Δt₃) der von den Signalgebern gemessenen Extrusionszeiten (t_{Vfl1}, t_{Vfl2}, t_{Vfl3}) untereinander differieren.

## Claims

1. A process for the extrusion blow moulding of hollow bodies from thermoplastics, wherein;
• tubular preforms (1) are extruded by means of a screw extruder (2) from the nozzle gap (4) of an extrusion head (5) controlled in accordance with a wall thickness program (3) and, in following cycles,
• the extruded preforms (1) are expanded in a blow mould (6) to form hollow bodies (7),
• the hollow bodies (7) are removed from the mould and adhering flashes are removed,
wherein, in addition, the extrusion time (t_{Vfl}) required until a preset tube length has been reached is measured for each preform (1) and its deviation (Δt) from the set value (tₛₒₗₗ) is determined characterised in that a signal associated with the preform (1) is stored when the set-value deviation (Δt) of the extrusion time lies outside a preset operational tolerance field (t_{Tol2-}, t_{Tol2+}), and in that a sorting device (9) for the ejection of faulty hollow bodies (7') is controlled by the signal.

2. A process according to claim 1, characterised in that the extrusion time (t_{Vfl}) used for the set-value comparison is detected by a measuring device (10) positioned near the bottom edge of the completely extruded preforms (1).

3. A process according to claim 1, characterised in that the extrusion time (t_{Vfl}) used for the set-value comparison is detected by a measuring device (10), the distance of which from the nozzle gap (4) is so dimensioned that this distance corresponds to the set-value length of a preform portion from the bottom edge of the preform or a reference marking to a critical preform cross-section associated with a function maximum of the wall thickness program (3).

4. A process according to claim 1, characterised in that the extrusion time (t_{Vfl1,2,3}) used for the set-value comparison is detected by a measuring device (10, 18a, 18b) comprising at least two signal transmitters disposed one beneath the other in the extrusion direction.

5. A process according to any one of claims 1 to 4, characterised in that the bottom edge of the preforms (1) is detected by at least one photoelectric barrier (11) which stops the measurement of the extrusion time.

6. A process according to claim 5, characterised in that a plurality of photoelectric barriers (11) are disposed horizontally side by side, in that the time measurements stopped by the light barriers are compared with one another and in that an error signal associated with the preform (1) is stored when the time differences between the stopped time measurements lie outside a preset tolerance range.

7. A process according to claim 6, characterised in that the error signal is used for the ejection of the hollow body (7') moulded from the relevant preform (1) and/or as a control variable for changing one of the operating parameters of the extrusion blow process.

8. A process according to claim 7, characterised in that the quantity of calibrating air or a skewed tube position is corrected in accordance with the sequence per unit of time of the measurement signals forming the basis of the error signal.

9. A process according to any one of claims 5 to 8, characterised in that the photoelectric barriers (11) are disposed in groups (12, 13) aligned horizontally at an angle of preferably 90° to one another and each comprising at least two parallel photoelectric barriers (11).

10. A process according to any one of claims 5 to 9, characterised in that the extrusion time (t_{Vfl}) used for the set-value comparison is determined by averaging of the time measurements stopped by the photoelectric barriers.

11. A process according to any one of claims 1 to 4, characterised in that during extrusion a marking is applied to the outside of the preform (1) and in that a measuring device detecting the marking is used for the measurement of the extrusion time (t_{Vfl}) used for the set-value comparison.

12. A process according to any one of claims 1 to 11, characterised in that the time measurement is started synchronously with the start of the working cycle or by a measurement signal from an optical measuring device disposed beneath the nozzle gap (4).

13. A process according to any one of claims 1 to 12, characterised in that frequency distributions in respect of the set-value deviation of the preforms are compiled and stored and in that the operational tolerance field (t_{Tol2-}, t_{Tol2+}) is changed in dependence on the applicable frequency distribution.

14. A process according to any one of claims 1 to 13, wherein the weight of the hollow bodies is measured and is controlled in accordance with a reference weight by adjustment of the nozzle gap (4) and/or of the extruder speed (n_{g}), characterised in that the reference weight is changed in dependence on the width of the operational tolerance field, a smaller reference weight being associated with a narrow tolerance field and a heavier reference weight being associated with a wider tolerance field.

15. A process according to any one of claims 1 to 14, characterised in that the screw speed (n_{g}) and/or the nozzle gap (4) is/are changed in one of the following working cycles in accordance with the set-value deviation (Δt) of the extrusion time (t_{Vfl}).

16. A process according to claim 15, characterised in that the set-value deviation (Δt) of the extrusion time (t_{Vfl}) together with the actual-value of the screw speed (n_{g}) and/or of the speed change as well as the actual-value for the nozzle gap (4) and/or the nozzle gap change are stored in a computer (14) and allocated to the preform (1) and to the hollow body (7) made therefrom.

17. A process according to any one of claims 1 to 16, characterised in that during the actual formation cycle of the preform an actuating variable for the correction of the position of the preforms (1) is activated when the set-value deviation (Δt of the measured extrusion time (t_{Vfl}) exceeds a preset limit, the measuring device (10, 18a, 18b) used for the measurement of the extrusion time (t_{Vfl}) being disposed along the extrusion path at a distance from the bottom edge of the completely extruded preform.

18. A process according to claim 17, characterised in that the actuating variable for the correction of the position of the preform (1) is quantitatively so dimensioned that the preform cross-section associated with a function maximum of the wall thickness program (3) is positioned in the blow mould (6) at a place where a maximum stretching associated with the function maximum occurs during the blowing operation.

19. A process according to any one of claims 15 to 18, wherein the extrusion time (t_{Vfl}) used for the set-value comparison is detected by a measuring device (10) positioned near the bottom edge of the completely extruded preforms (1), characterised in that for the purpose of fine correction the relative movement between the blow mould (6) and the preform (1) is changed and/or the progression of the wall thickness program (3) is displaced relatively to the preform (1) and/or the moulding time is changed or a different comparable time correction is effected and/or in the wall thickness program (3) the length of the program curve portion (y₃) associated with the portion between the bottom edge of the preform and a preform cross-section (KP2) which is critical in respect of the stretching of the preform (1) occurring later in the blow mould (6), is changed when a displacement of the critical cross-section (KP2) relative to the blow mould (6) is detected even though the weight and extrusion time measurements (G_{Ist}, t_{Vfl}) correspond to the set-values (G_{Soll,} t_{Soll}).

20. A process according to any one of claims 1 to 18, characterised in that operating parameters for the compensation of sag and/or shrinkage are determined by a measuring device comprising a plurality of signal transmitters (10, 18a, 18b) disposed one beneath the other in the extrusion direction and by extrusion time comparison of the extrusion times (t_{Vfl1,} t_{Vf12,} t_{Vfl3}) measured therewith.

21. A process according to any one of claims 15 to 18, wherein the extrusion time (t_{Vfl}) used for the set-value comparison is detected by a measuring device (10, 18a, 18b) comprising at least two signal transmitters disposed one beneath the other in the extrusion direction, characterised in that for the purpose of fine correction a correction of the program curve (15, 16, 17) is effected when the set-value deviations (Δt₁, Δt₂, Δt₃) of the extrusion times (t_{Vfl1}, t_{Vfl2}, t_{Vfl3}) measured by the signal transmitters differ from one another.

## Revendications

1. Procédé de moulage par extrusion-soufflage de corps creux en matière thermo-plastique, selon lequel
- on extrude des ébauches (1) en forme de gaine à l'aide d'une extrudeuse à vis (2), à travers une ouverture de filière (4) d'une tête d'extrusion (5) réglable en fonction d'un programme d'épaisseur de paroi (3),
- on élargit les ébauches (1) extrudées dans un moule de soufflage (6) pour former des corps creux,
- on démoule les corps creux (7) et on élimine les picots adhérents,
dans lequel en outre, pour chaque ébauche (1), on mesure le temps d'extrusion (t_{vfl}) nécessaire pour obtenir une longueur de gaine donnée et on détermine son écart (Δt) par rapport à une valeur de consigne (tₛₒₗₗ), caractérisé en ce qu'on mémorise un signal associé à l'ébauche (1) lorsque l'écart (Δt) de la durée d'extrusion se situe en dehors d'une plage de tolérances (t_{Tol2-,} t_{Tol2+}) donnée et en ce qu'on commande, avec le signal, un dispositif de tri (9) pour éjecter les corps creux (7') défectueux.

2. Procédé selon la revendication 1, caractérisé en ce qu'on mesure la durée d'extrusion (t_{Vfl}) utilisée pour la comparaison avec la valeur de consigne à l'aide d'un dispositif de mesure (10) qui est positionné à proximité du bord inférieur de l'ébauche (10) terminée d'extrusion.

3. Procédé selon la revendication 1, caractérisé en ce qu'on mesure la durée d'extrusion (t_{Vfl}) utilisée pour la comparaison avec la valeur de consigne à l'aide d'un dispositif de mesure (10), dont la distance par rapport à l'ouverture de filière (4) est telle qu'elle corresponde à la longueur de consigne d'un tronçon d'ébauche, depuis un bord inférieur de l'ébauche ou un repère de référence jusqu'à une section critique de l'ébauche, à laquelle est associé un maximum fonctionnel du programme d'épaisseur de paroi (3).

4. Procédé selon la revendication 1, caractérisé en ce qu'on mesure la durée d'extrusion (t_{Vfl, 2, 3}) utilisée pour la comparaison avec la valeur de consigne à l'aide d'un dispositif de mesure (10, 18a, 18b) qui comporte au moins deux détecteurs disposés l'un derrière l'autre dans la direction de mesure.

5. Procédé selon une des revendications 1 à 4, caractérisé en ce qu'on détecte le bord inférieur des ébauches (1) au moyen d'au moins un barrage photo-électrique (11) qui déclenche la mesure de la durée d'extrusion.

6. Procédé selon la revendication 5, caractérisé en ce que plusieurs barrages photo-électriques (11) sont disposés horizontalement les uns à côté des autres, en ce qu'on compare entre elles les durées mesurées et en ce qu'on mémorise un signal d'erreur associé à l'ébauche, lorsque les différences entre les durées mesurées se situent en dehors d'une plage de tolérances prédéterminée.

7. Procédé selon la revendication 6, caractérisé en ce qu'on utilise le signal d'erreur pour l'éjection du corps creux (7') façonné à partir de l'ébauche (1) concernée et/ou comme grandeur de régulation pour modifier un paramètre de fonctionnement du procédé d'extrusion-soufflage.

8. Procédé selon la revendication 7, caractérisé en ce qu'en fonction de la succession dans le temps des signaux de mesure à l'origine du signal d'erreur, on corrige le débit d'air de support ou une avance en biais de la gaine.

9. Procédé selon une des revendications 5 à 8, caractérisé en ce que les barrages photo-électriques (11) sont disposés en groupes (12, 13) qui, dans la direction horizontale, sont mutuellement inclinés d'un angle de préférence de 90° et comprennent chaque fois au moins deux barrages photo-électriques (11) parallèles.

10. Procédé selon une des revendications 5 à 9, caractérisé en ce qu'on détermine la durée d'extrusion (t_{Vfl}) pour la comparaison avec la valeur de consigne, par calcul de la moyenne des durées mesurées par les barrages photo-électriques

11. Procédé selon une des revendications 1 à 4, caractérisé en ce que lors de l'extrusion, on applique un repère sur la face extérieure de l'ébauche (1) et en ce que pour la mesure de la durée d'extrusion (t_{Vfl}) pour la comparaison avec la valeur de consigne, on utilise un dispositif de mesure qui détecte le repère.

12. Procédé selon une des revendications 1 à 11, caractérisé en ce qu'on déclenche la mesure de la durée en synchronisme avec le début du cycle de travail ou par un signal de mesure d'un dispositif de mesure optique disposé au-dessous de l'ouverture de filière (4).

13. Procédé selon une des revendications 1 à 12, caractérisé en ce que pour l'écart des ébauches par rapport à la valeur de consigne, on établit et on mémorise des diagrammes de fréquence et en ce qu'on fait varier la plage de tolérances (t_{Tol2-}, t_{Tol2+}) de service en fonction de la fréquence rencontrée.

14. Procédé selon une des revendications 1 à 13, selon lequel on mesure le poids des ébauches et, en fonction d'un poids de référence, on effectue une régulation par réglage de l'ouverture de filière (4) et/ou de la vitesse de rotation (nₛ) de l'extrudeuse, caractérisé en ce qu'on modifie le poids de référence en fonction de la largeur de la plage de tolérances retenue, un poids de référence plus faible étant associé à une plage de tolérances étroite et un poids de référence plus important étant associé à une plage de tolérances large.

15. Procédé selon une des revendications 1 à 14, caractérisé en ce qu'en fonction de l'écart (Δt) de la durée d'extrusion (t_{Vfl}) par rapport à la valeur de consigne, on modifie la vitesse de rotation (n_{S}) de la vis et/ou l'ouverture de filière (4) au cours d'un des cycles de travail consécutifs.

16. Procédé selon la revendication 15, caractérisé en ce qu'on mémorise dans un calculateur (14) l'écart (Δt) de la durée d'extrusion (t_{Vfl}) par rapport à la valeur de consigne ainsi que la vitesse de rotation (n_{S}) effective de la vis et/ou la variation de la vitesse de rotation ainsi que la valeur réelle de l'ouverture de filière (4) et/ou la variation de l'ouverture de filière en association avec l'ébauche (1) et le corps creux (7) réalisé à partir de celle-ci.

17. Procédé selon une des revendications 1 à 16, caractérisé en ce que dès le stade du façonnage de l'ébauche, on active une grandeur de réglage pour la correction de la position de l'ébauche (1), lorsque l'écart (Δt)de la durée d'extrusion (t_{Vfl}) mesurée par rapport à la valeur de consigne dépasse un seuil donné, un dispositif de mesure (10, 18a, 18b), qui est disposé le long du trajet d'extrusion, à distance du bord inférieur de l'ébauche complètement extrudée, étant utilisé pour la mesure de la durée d'extrusion (t_{Vfl}).

18. Procédé selon la revendication 17, caractérisé en ce que la grandeur de réglage pour la correction de la position de l'ébauche (1) est choisie telle, que la section d'ébauche associée à un maximum fonctionnel du programme d'épaisseur de paroi (3) soit positionnée dans le moule de soufflage (6), à l'endroit où, lors de l'opération de soufflage, se produit un allongement maximum lié à la valeur maximale fonctionnelle.

19. Procédé selon une des revendications 15 à 18, selon lequel on mesure la durée d'extrusion (t_{Vfl}) utilisée pour la comparaison avec la valeur de consigne, à l'aide d'un dispositif de mesure (10) qui est positionné dans le voisinage du bord inférieur de l'ébauche (1) terminée d'extrusion, caractérisé en ce que, pour une correction précise, lorsqu'on constate un déplacement de la section critique (KP2) par rapport au moule de soufflage (6), bien que le poids et la durée d'extrusion (G_{Ist,} t_{Vfl}) correspondent aux valeurs de consigne, on agit sur le déplacement relatif entre le moule de soufflage (6) et l'ébauche (1) et/ou on décale le déroulement du programme d'épaisseur de paroi (3) par rapport à l'ébauche (1) et/ou on modifie la durée de façonnage ou on procède à une correction de durée similaire et/ou on modifie, à l'intérieur du programme d'épaisseur de paroi (3), la longueur de la portion de programme (y₃) qui est associée au tronçon entre le bord inférieur de l'ébauche et une section (KP2) de l'ébauche critique du point de vue de l'allongement qui à lieu ensuite dans le moule de soufflage (6).

20. Procédé selon une des revendications 1 à 18, caractérisé en ce qu'à l'aide de plusieurs détecteurs (10, 18a, 18b) disposés les uns derrière les autres dans la direction de mesure et par une comparaison des durées d'extrusion (t_{Vfl1}, t_{Vfl2}, t_{Vfl3}) mesurées à l'aide desdits détecteurs, on détermine des paramètres de fonctionnement pour compenser le fléchissement et/ou le retrait.

21. Procédé selon une des revendications 15 à 18, dans lequel la durée d'extrusion (t_{Vfl}) utilisée pour la comparaison avec la valeur de consigne est mesurée à l'aide d'un dispositif de mesure (10, 18a, 18b) qui comporte au moins deux détecteurs disposés l'un derrière l'autre, caractérisé en ce que pour une correction précise, on corrige la courbe de programme (15, 16, 17) lorsque les écarts par rapport à la consigne (Δt₁, Δt₂, Δt₃) des durées d'extrusion (t_{Vfl1,} t_{Vfl2,} t_{Vfl3}) mesurées par les détecteurs diffèrent entre eux.
